# FASCICULE DE BREVET EUROPEEN

(11) **EP 3 745 046 B1**
(45) Date de publication et mention de la délivrance du brevet: **08.05.2024**
(21) Numéro de dépôt: 20163207.2
(22) Date de dépôt: 14.03.2020
(51) Int. Cl.: F24H 9/13, F24H 4/02

(54) **PANOPLIE ET PANNEAU DE RACCORDEMENT POUR DISPOSITIF HYDRAULIQUE DE RÉGULATION THERMIQUE**
ANSCHLUSSSATZ UND STECKFELD FÜR HYDRAULISCHE VORRICHTUNG ZUR WÄRMEREGULIERUNG
ARRAY AND CONNECTION PANEL FOR THERMALLY REGULATED HYDRAULIC DEVICE

(30) Priorité: 14.03.2019 FR 1902645
(43) Date de publication de la demande: 02.12.2020
(73) Titulaire: France Prefa Concept, 40990 Saint-Paul-les-Dax (FR)
(72) Inventeur: MIGNOT, Thierry, 40990 Saint-Paul-les Dax (FR)
(74) Mandataire: A.P.I. Conseil

(56) Documents cités:
- WO-A1-2019/048798
- DE-U1- 29 809 433
- DE-U1-202013 101 412

## Description

La présente invention concerne le domaine des circuits de distribution hydraulique pour dispositif hydraulique de régulation thermique. En particulier, il sera fait référence à un dispositif de type panneau de raccordement permettant de faciliter et sécuriser la mise en place du circuit hydraulique d'un dispositif hydraulique de régulation thermique. La présente invention concerne également un dispositif hydraulique de régulation thermique équipé d'un tel dispositif.

### [Art antérieur]

Le secteur du bâtiment pèse pour plus de 40% dans la consommation énergétique française et plus de 70 % de cette consommation est associée au chauffage du bâtiment ou de l'eau consommée. Ainsi, dans le cadre de la réduction de l'empreinte carbone des activités humaines, les nouveaux dispositifs hydrauliques de régulation thermique de bâtiment sont de plus en plus nombreux.

Par exemple, afin de limiter les pertes énergétiques il a été proposé dans le document DE202013101412, des boîtiers étanchéifiés visant à améliorer l'isolation thermique avec l'air ambiant d'un boîtier de raccordement pour conduites hydrauliques.

Ainsi, ces dernières années ont vu le développement de pompes à chaleurs permettant de transférer l'énergie thermique d'une source de chaleur à un dissipateur de chaleur. Les pompes à chaleur sont capables de déplacer l'énergie thermique dans le sens opposé du transfert de chaleur spontané, en absorbant la chaleur d'un espace froid et en la libérant dans un espace plus chaud.

La conception la plus courante d'une installation de pompe à chaleur implique quatre composants principaux : un condenseur, un détendeur, un évaporateur et un compresseur. Le fluide caloporteur circulant à travers ces composants est appelé réfrigérant. Les pompes à chaleur utilisent le réfrigérant en tant que fluide intermédiaire pour absorber la chaleur provenant d'un circuit où il se vaporise (évaporateur), puis pour libérer de la chaleur lorsque le réfrigérant se condense, dans le condenseur. En mode de chauffage, un serpentin extérieur peut faire office d'évaporateur, tandis qu'un serpentin intérieur tel qu'un plancher chauffant peut faire office de condenseur. Le réfrigérant qui s'écoule dans l'évaporateur (serpentin extérieur) transporte l'énergie thermique de l'air extérieur (ou du sol, ou de l'eau) à l'intérieur. La température de la vapeur augmente dans la pompe en la comprimant. Le serpentin intérieur transfère ensuite de l'énergie thermique (y compris l'énergie de la compression) à l'air intérieur, qui peut être ensuite déplacée par un système de traitement de l'air.

En mode de chauffage, les pompes à chaleur sont généralement trois à quatre fois plus efficaces que les simples appareils de chauffage à résistance électriques utilisant la même quantité d'électricité. Néanmoins, le coût d'installation d'une pompe à chaleur est plus élevé que celui d'un appareil de chauffage à résistance. Ce coût d'installation élevé est en partie expliqué par l'étape de raccordement de la pompe à chaleur aux conduites permettant le transfert d'énergie et la distribution de chaleur dans l'installation. En effet, l'installation d'un circuit hydraulique conforme à la réglementation requière généralement des piquages, le façonnage de conduites, ou canalisations, et doit se faire en suivant une règlementation établie (e.g. en France NF DTU 60.1, DTU 60.11 et DTU 65.10). Le façonnage de ces canalisations consiste principalement en la réalisation de coupe, de filetage, de cintrage et/ou de perçage des tubes. Ces opérations sont généralement réalisées, préalablement à l'assemblage des éléments façonnés, directement dans les pièces destinées à recevoir les dispositifs hydrauliques de régulation thermique de bâtiment tels que les pompes à chaleur. L'assemblage quant à lui, dépendant de la nature des canalisations, peut se faire par vissage, soudo-brasage, soudage autogène, brasage capillaire, raccord à compression, raccords spéciaux, raccords à sertir, brides ou piquage. De même, les canalisations sont fixées indépendamment contre les murs de l'installation à l'aide d'étriers ou de colliers métalliques selon la nature des canalisations. La règlementation dans certains territoires peut être très stricte obligeant les installateurs à impérativement respecter des dimensions précises notamment au niveau de l'écartement entre les conduites et le mur support ou encore entre les écrous. Ce façonnage et cette mise en place indépendante des différentes portions de conduites, directement sur le site de l'installation est alors très chronophage. De plus, elle nécessite d'être parfaitement adaptée aux sorties du dispositif hydraulique de régulation thermique de façon à réduire les contraintes supportées par les conduites et le dispositif hydraulique de régulation thermique (e.g. pompe à chaleur).

Ainsi, toutes ces étapes sont consommatrices de temps et potentiellement génératrices d'accidents. Cela est d'autant plus le cas lorsque le dispositif hydraulique à installer est lourd et volumineux. En outre, lors de la mise en place de telles distributions, il existe des occurrences de malfaçons dont la fréquence n'est pas négligeable.

Le coût d'installation à court terme et à long terme de ces dispositifs hydrauliques de régulation thermique pourrait alors être réduit si ces installations pouvaient être réalisées par des personnes non spécialisées, c'est-à-dire ne maitrisant pas les méthodes de coupe, de filetage, de cintrage et/ou de perçage des tubes ainsi que les techniques d'assemblages telles que soudo-brasage, soudage autogène ou brasage capillaire. Il a déjà été proposé des ensembles tels que des répartiteurs (CH593394), compacts (CH640290) ou non, permettant, notamment via une canalisation principale fixée au niveau d'une paroi arrière et présentant des raccords de dérivation, de répartir le flux hydraulique (EP2196584), ou encore des unités hydrauliques pouvant être reliées entre elles (WO2011029971). Néanmoins, il n'existe pas de solution satisfaisante permettant de répondre aux problèmes associés aux coûts et aux risques associés au façonnage sur site du circuit hydraulique de dispositifs hydrauliques de régulation thermique des bâtiments.

Ainsi, il existe un besoin pour de nouveaux dispositifs permettant l'installation rapide et sans risque d'un circuit hydraulique de dispositifs hydrauliques de régulation thermique d'une installation.

### [Problème technique]

L'invention a donc pour but de remédier aux inconvénients de l'art antérieur. En particulier, l'invention a pour but de proposer une panoplie pour la fabrication d'un panneau de raccordement pour dispositif hydraulique de régulation thermique, un tel panneau de raccordement, un dispositif hydraulique de régulation thermique couplé à un tel panneau de raccordement et une méthode de fabrication de la panoplie, capables de répondre aux problèmes associés aux coûts de construction et aux risques associés au façonnage sur site d'un circuit hydraulique de dispositifs hydrauliques de régulation thermique, notamment de pompe à chaleur. Ce dispositif et cette méthode permettent également à des non spécialistes d'installer aisément un circuit hydraulique avec une occurrence réduite de malfaçon.

### [Brève description de l'invention]

A cet effet, l'invention concerne une **panoplie de raccordement** pour dispositif hydraulique de régulation thermique de bâtiment, ladite panoplie comportant:
- un support de circuit agencé pour accueillir plusieurs conduites hydrauliques, ledit support étant constitué au moins en partie d'un matériau polymère,
- une plaque métallique apte à être fixée au support de circuit et comportant au moins trois bras de fixation configurés pour permettre une fixation du support de circuit au dispositif hydraulique de régulation thermique de bâtiment, et
- plusieurs conduites hydrauliques, de préférence façonnées.

En particulier, l'invention concerne une **panoplie de raccordement** pour dispositif hydraulique de régulation thermique de bâtiment selon la revendication 1. Ladite panoplie comporte:
- un support de circuit agencé pour accueillir plusieurs conduites hydrauliques, ledit support étant constitué au moins en partie d'un matériau polymère,
- une plaque métallique apte à être fixée au support de circuit et comportant au moins trois bras de fixation configurés pour permettre une fixation du support de circuit au dispositif hydraulique de régulation thermique de bâtiment, et
- plusieurs conduites hydrauliques, de préférence façonnées ;
en outre, le support de circuit est agencé pour accueillir les conduites hydrauliques du côté d'une première face du support de circuit ; et au moins une partie de la plaque métallique est positionnée au contact d'une seconde face du support de circuit à l'opposé de la première face.

Une telle panoplie de raccordement permet de diminuer les risques de malfaçon sur le site d'installation. En outre, une telle panoplie permet une installation rapide, simple et avec une sécurité et une protection augmentée d'un circuit hydraulique pour dispositif hydraulique de régulation thermique. En effet, la combinaison d'une plaque métallique consolidant le support de circuit et de conduites hydrauliques, de préférence façonnées permet de réduire le temps d'assemblage sur site et les coûts d'installation notamment en étant accessible à des personnes non spécialisées. Ainsi, avantageusement, les conduites hydrauliques n'ont pas besoin d'être découpées ou façonnées sur site. En outre, un tel support permet de respecter plus facilement la législation en vigueur. En outre, un tel agencement permet d'améliorer la stabilité et la rigidité d'un panneau formé à partir de cette panoplie.

La panoplie de raccordement sera ainsi de préférence agencée pour pouvoir venir se fixer au dispositif hydraulique de régulation thermique de bâtiment. De plus, la panoplie est autosupportée, chacune des conduites hydrauliques étant supportée et maintenue en place grâce au support fixé au dispositif hydraulique de régulation thermique de bâtiment et aux autres conduites hydrauliques.

**Selon d'autres caractéristiques optionnelles de la panoplie** :
- les bras de fixation sont positionnés à des extrémités de la plaque métallique. De façon préférée, les bras métalliques sont un prolongement de la plaque métallique. Cela permet d'améliorer encore le temps d'assemblage sur site, la stabilité et la rigidité
- le support de circuit est agencé pour accueillir les conduites hydrauliques du côté d'une première face du support de circuit et en ce qu'au moins une partie de la plaque métallique est positionnée au contact d'une seconde face du support de circuit à l'opposé de la première face. Un tel positionnement permet d'améliorer la stabilité et la rigidité d'un panneau formé à partir de cette panoplie.
- au moins une partie de la plaque métallique est au contact du support de circuit et la partie de la plaque métallique au contact du support de circuit présente une épaisseur d'au plus 10 mm, de préférence d'au plus 5 mm, et de façon plus préférée d'au plus 2 mm. De telles épaisseurs permettent à cette plaque métallique de renforcer et consolider le support de circuit en évitant tout risque de casse ou de rupture tout en étant peu encombrante et en ne l'alourdissant pas. Ceci augmente la maniabilité et l'assemblage ce qui facilite et simplifie l'installation et permet également un gain de temps.
- moins une partie de la plaque métallique est au contact du support de circuit et la partie de la plaque métallique au contact du support de circuit présente une surface supérieure à 100 cm², de préférence supérieure à 200 cm² de façon plus préférée supérieure à 500 cm². Ceci permet de renforcer et consolider le support de circuit. En outre, ceci permet d'augmenter la résistance du support de circuit tout en évitant des risques de casse ou de rupture.
- la plaque métallique est constituée d'un alliage métallique tel que de l'acier inoxydable. Ceci permet d'augmenter la durée de vie de la plaque métallique, d'assurer sa robustesse et de lutter contre la corrosion.
- le support de circuit présente une densité globale inférieure à 700 kg/m³. Cela permet de faciliter sa manipulation tout en allégeant le support de circuit.
- le support de circuit comporte au moins une plaque en matériau polymère rigide présentant une densité supérieure à 700 kg/m³ sur laquelle est disposé un polymère expansé présentant une densité inférieure à 700 kg/m³. Cela permet de disposer d'un support résistant tout en n'étant pas trop lourd. En outre, la présence du polymère expansé permet de réduire les vibrations, liées à l'écoulement de fluides. Ainsi, cela permet de réduire les nuisances acoustiques.
- le support comporte deux plaques en matériau polymère rigide entre lesquelles est disposé le polymère expansé. Cela permet d'augmenter encore la résistance du support tout en conservant une réduction des nuisances acoustiques ou plus largement des vibrations.
- la dureté de la surface de la ou des plaques en matériau polymère rigide est avantageusement supérieure à 40 telle que mesurée par la norme ISO 868. Cette dureté de surface permet de conserver un support de circuit peu sensible aux rayures ou aux dommages externes légers convenant ainsi parfaitement à une utilisation dans un environnement de type chantier / construction / installation.
- le support de circuit présente une surface comprise entre 0,1 m² et 5 m², de préférence comprise entre 0,25 m² et 3 m², de façon plus préférée comprise entre 0,5 m² et 2 m². Cette surface pour le support est suffisante pour permettre la fixation des conduites sur le support et assurer sa rigidité tout en limitant le poids.
- le support comporte un ou plusieurs évidements. En outre, la plaque métallique peut aussi comporter un ou plusieurs évidements. Des évidements, dans le support et ou la plaque métallique, permettent de réduire encore le poids du support de circuit et permettent un accès facilité aux conduites hydrauliques.
- la plaque métallique est fixée au support de circuit par l'intermédiaire d'au moins 4 organes de fixation sélectionnés parmi : écrou à griffes, écrou à douille, inserts filetés, écrous en T, écrou à embrase. Ceci permet de tenir le support de circuit au contact de la plaque métallique. Ceci permet de sécuriser le contact entre la plaque métallique et le support de circuit et d'augmenter la qualité et la fiabilité de la fixation.
- les conduites hydrauliques sont constituées en majorité de cuivre, d'acier ou de laiton. Ceci permet d'augmenter le transfert de chaleur, la conductivité thermique mais également de simplifier l'usinage des conduites hydrauliques.
- les conduites hydrauliques comportent à chacune de leurs extrémités un moyen de raccordement amovible. Ceci permet d'une part, un raccordement amovible avec des conduits permettant d'acheminer l'eau et d'autre part, un raccordement amovible avec d'autres éléments tels qu'un compteur ou une des sorties de distribution. Ceci permet de faciliter l'assemblage et l'installation sur site. Cela se traduit par un gain de temps et une diminution des risques de malfaçons.
- le raccordement amovible est sélectionné parmi : écrou, mamelon droit, réduit ou égal, raccord 3 pièces, raccord union, té, coude. Ceci permet de faciliter la jonction entres les conduites ou entre une conduite et un autre élément.
- au moins une des conduites hydrauliques comporte un clapet anti-thermosiphon. Ceci permet de réguler la circulation de l'eau et améliorer les propriétés de régulation thermique du dispositif.
- elle comporte au moins un élément sélectionné parmi : dispositif anti-pollution, soupape de sécurité, groupe de remplissage, vanne d'arrêt, vanne directionnelle, débitmètre, purgeur d'air, séparateur d'air, pot de décantation, soupape de pression différentielle, et/ou soupape antigel. Ceci permet de réguler, surveiller et contrôler le circuit d'eau.
- elle comporte en outre des moyens de fixation en polymère aptes à fixer les conduites hydrauliques au support de circuit. Ceci permet d'une part, le maintien des conduites hydrauliques sur le support de circuit et d'autre part, de faciliter la fixation entres les conduites et le support de circuit. Ceci permet de faciliter l'assemblage et l'installation sur site. Cela se traduit par un gain de temps et une diminution des risques de malfaçons.
- Le support de circuit comporte des trous de fixation agencés de façon permettre la fixation des moyens de fixation en polymère sur le support de circuit.

L'invention porte en outre, sur un **panneau de raccordement** formé à partir d'une panoplie de raccordement selon l'invention.

A l'aide d'un tel panneau, étant donné qu'il comporte déjà tous les éléments de la panoplie de raccordement, notamment un support de circuit, une plaque métallique et plusieurs conduites hydrauliques, peut alors être rapidement installé sur le site de l'installation et faire gagner un temps important et entraine une réduction des risques d'accident ou de malfaçons. Cela est d'autant plus vrai concernant l'installation avec un dispositif hydraulique de régulation thermique. Cela est possible car une majorité des opérations de conception des conduites ou tubes nécessaires à la distribution de l'eau a été réalisée avant l'installation sur site par exemple dans des ateliers spécialisés. En outre, un tel panneau pré fabriqué permet d'atteindre une marge d'erreur très faible dans les dimensions caractérisant l'agencement des conduites et donc un respect des réglementations sur le façonnage de conduites.

**Selon d'autres caractéristiques optionnelles du panneau** :
- les conduites hydrauliques sont fixées au support de circuit par l'intermédiaire d'un moyen de fixation en polymère. Ceci permet d'une part, le maintien des conduites hydrauliques sur le support de circuit et d'autre part, de faciliter la fixation entres les conduites et le support de circuit. Ceci permet de faciliter l'assemblage et l'installation sur site. Cela se traduit par un gain de temps et une diminution des risques de malfaçons
- le moyen de fixation en polymère est constitué d'au moins deux parties, une première partie étant apte à s'insérer dans le support de circuit et une seconde partie étant apte à maintenir une conduite hydraulique entre la première partie et la seconde partie et à se fixer de manière amovible à la première partie.
- le moyen de fixation en polymère est constitué en une seule partie. Ceci permet de faciliter la jonction entres les conduites et le support de circuit.
- au moins deux des conduites hydrauliques correspondent à une sortie d'eau chaude de chauffage et au moins deux des conduites hydrauliques correspondent à un retour d'eau chaude de chauffage. Cela permet de disposer de deux zones de régulation thermique indépendantes dans l'habitation.

L'invention concerne en outre, **un dispositif hydraulique de régulation thermique de bâtiment** couplé à un panneau de raccordement selon l'invention.

Un tel dispositif est rapidement et simplement installé ou peut faire l'objet d'une maintenance facilitée. En effet, l'assemblage est préalablement réalisé. En outre, cela diminue grandement de risque de malfaçon et ne nécessite pas de connaissance sur le site d'installation. Un tel dispositif permet donc également de réduire les coûts. Par ailleurs, un tel dispositif hydraulique est parfaitement adapté à la réglementation en vigueur. Ceci permet également de réduire les contraintes supportées par les conduites et le dispositif.

L'invention se rapport également à un **procédé de fabrication d'une panoplie de raccordement,** comprenant les étapes suivantes :
- découpe d'une pluralité de conduites hydrauliques à des dimensions souhaitées,
- cintrage de la pluralité de conduites hydrauliques selon des configurations prédéterminées,
- découpe d'un support de circuit à des dimensions souhaitées, ledit support de circuit étant constitué au moins en partie d'un matériau polymère,
- découpe d'une plaque métallique comportant au moins trois bras de fixation,
- cintrage de la plaque métallique de façon à ce que les au moins trois bras de fixation permettent une fixation de la plaque métallique à un dispositif hydraulique de régulation thermique de bâtiment, et
- fixation du support de circuit à la plaque métallique.

Ce procédé permet la réalisation de toutes les étapes de conception de la panoplie de raccordement dans un atelier dédié à la construction de ces panneaux de distribution hydraulique. Toutes les étapes de ce procédé n'ont pas à être réalisées de façon précaire sur le site de l'installation permettant ainsi une réduction du coût, des malfaçons et des risques d'accident.

En outre, le procédé selon l'invention peut comporter une étape supplémentaire de découpe du support de circuit, éventuellement simultanément à la première étape de découpe, permettant la réalisation de trous de fixations dans le support de circuit.

D'autres avantages et caractéristiques de l'invention apparaitront à la lecture de la description suivante donnée à titre d'exemple illustratif et non limitatif, en référence aux Figures annexées qui représentent :
La figure 1 un schéma d'une panoplie de raccordement selon un mode de réalisation de l'invention.
La figure 2 un schéma d'une vue de profil d'un panneau de raccordement selon un mode de réalisation de l'invention.
La figure 3 un schéma d'une vue de face d'un panneau de raccordement selon un mode de réalisation de l'invention.
La figure 4A un schéma en vue en perspective de moyen de fixation selon un mode de réalisation de l'invention.
La figure 4B un schéma en vue en perspective de moyen de fixation selon un mode de réalisation de l'invention.
La figure 5 un schéma d'une vue de profil d'un dispositif hydraulique de régulation thermique couplé à un panneau de raccordement selon un mode de réalisation de l'invention.
La figure 6 un schéma d'un procédé de fabrication d'une panoplie de raccordement selon un mode de réalisation de l'invention.

### [Description de l'invention]

Dans la suite de la description on entend par « **panoplie** », un ensemble de plusieurs éléments ou objets, de préférence non assemblés entre eux, ou un kit ou encore une collection de plusieurs éléments séparés.

Le terme « **façonnée** » au sens de l'invention signifie déjà mis en forme. Dans un contexte de conduites hydraulique cela signifie par exemple qu'elles ont été découpées et cintrées selon des formes adaptées et prédéterminées.

L'expression « **au contact de** » au sens de l'invention signifie que deux objets se touchent.

Dans la suite de la description, on entend par « **sensiblement égale** », une valeur variant de moins de 30 % par rapport à la valeur comparée, de préférence de moins de 20 %, de façon encore plus préférée de moins de 10 %. Lorsque sensiblement identique est utilisée pour comparer des formes alors la forme vectorisée varie de moins de 30 % par rapport à la forme vectorisée comparée, de préférence de moins de 20 %, de façon encore plus préférée de moins de 10 %.

On entend par « **installation** », un bâtiment comportant un ou une pluralité d'étages ou de pièces ou encore un logement comportant une ou plusieurs pièces. Par exemple, dans le cadre d'un hôtel, une installation peut correspondre à un bâtiment, un étage, une aile du bâtiment ou encore une chambre.

Le terme « **amovible** », au sens de l'invention correspond à la capacité à être détaché, enlevé ou démonté aisément sans avoir à détruire des moyens de fixation soit parce qu'il n'y a pas de moyen de fixation soit parce que les moyens de fixation sont aisément et rapidement démontables (e.g. encoche, vis, languette, ergot, clips, écrou, filetage). Par exemple, par amovible, il faut comprendre que l'objet n'est pas fixé par soudure ou par un autre moyen non prévu pour permettre de détacher l'objet. Par exemple, un moyen de raccordement apte à permettre un raccordement amovible peut être un raccord fileté, un raccord male femelle maintenu par exemple par un triclamp ou un raccord par bride. Ces moyens de raccordement peuvent en outre comporter des joints d'étanchéité.

Le terme « **vanne** », au sens de l'invention correspond à un dispositif manuel ou électrique permettant de modifier ou stopper le débit de l'eau dans une canalisation (un tube ou une conduite) en utilisant un signal électrique ou une action mécanique. Une vanne selon l'invention peut également intégrer une sonde (e.g. vanne porte sonde). En particulier, le terme « **électrovanne** », au sens de l'invention correspond à un dispositif permettant de commander ou de modifier le débit de l'eau dans une canalisation (un tube ou une conduite) en utilisant un signal électrique. Il peut par exemple intégrer un solénoïde ou un moteur électrique.

De plus en plus d'installations ou de bâtiments comportent des dispositifs hydrauliques de régulation thermique, tels que des pompes à chaleurs, permettant de transférer l'énergie thermique d'une source de chaleur à un dissipateur de chaleur. Les pompes à chaleur sont capables de déplacer l'énergie thermique dans le sens opposé du transfert de chaleur spontané, en absorbant la chaleur d'un espace froid et en la libérant dans un espace plus chaud. L'installation de dispositifs hydrauliques de régulation thermique et en particulier de pompe à chaleur présente de nombreux points critiques nécessitant une attention particulière de l'installateur. En effet, celui-ci doit raccorder parfaitement chaque élément entre eux, directement sur le site de l'installation et en respectant une règlementation très stricte. L'installateur doit alors maîtriser les différentes techniques d'installation, de façonnage et d'assemblage. Ainsi, les installations se trouvent être particulièrement chronophages et présentent un risque élevé de malfaçon.

Ainsi, les inventeurs ont développé une nouvelle panoplie 1 de raccordement pour dispositif 2 hydraulique de régulation thermique de bâtiment. Une telle panoplie de raccordement permet une installation simple, rapide et facilité. En outre, l'installation d'une telle panoplie est accessible même pour des personnes non spécialisées. Ceci permet également de réduire le coût des installations et notamment le temps d'installation, de façonnage et d'assemblage.

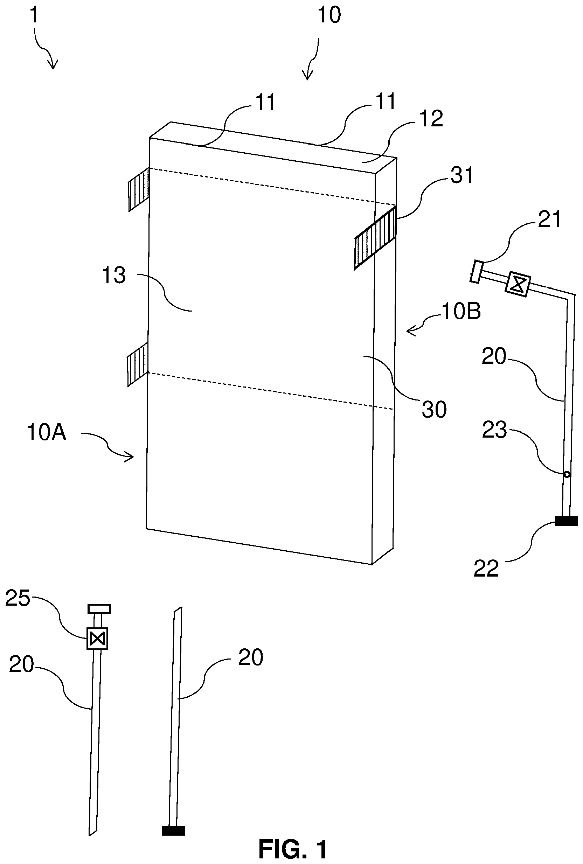

L'invention va être décrite dans le contexte d'une pompe à chaleur, toutefois l'invention ne se limite pas à cet exemple et peut trouver des applications dans toute configuration dans laquelle un dispositif hydraulique de régulation thermique est mis en oeuvre. **La** **figure 1** représente une panoplie de raccordement selon un mode de réalisation de l'invention.

Une panoplie 1 de raccordement pour dispositif 2 hydraulique de régulation thermique de bâtiment comporte de préférence un ensemble d'éléments non assemblés entre eux. Cette panoplie peut être présentée sous forme de kit. De préférence cette panoplie comporte plusieurs éléments, objets, pièces, appareils non encore assemblés ou fixés entre eux. Cette panoplie est pour le, de préférence destinée au, raccordement d'un dispositif 2 hydraulique de régulation thermique de bâtiment ou d'installation. Un tel dispositif 2 hydraulique peut correspondre à une pompe à chaleur (PAC), un dispositif de chauffage, de climatisation ou de ventilation. De préférence, il s'agit de tout dispositif refroidissant ou réchauffant une installation telle qu'un bâtiment. De façon plus préférée, le dispositif 2 hydraulique de régulation thermique est une pompe à chaleur.

En outre, l'invention est particulièrement adaptée aux dispositifs comportant une pluralité de sorties et/ou d'entrées hydraulique. Ainsi, une panoplie 1 de raccordement pour dispositif hydraulique de régulation thermique de bâtiment comporte un support de circuit 10, une plaque métallique 30, plusieurs conduites hydrauliques 20.

La panoplie 1 de raccordement comporte **un support de circuit** 10 agencé pour accueillir plusieurs conduites hydrauliques 20. Le support 10 de circuit comprend au moins deux faces 10A, 10B. Une première face 10A du support de circuit 10 est de préférence agencée pour accueillir les conduites hydrauliques 20. De préférence, la première face 10A est destinée à être en regard du dispositif 2 hydraulique de régulation thermique.

Ainsi, un tel agencement permet de rapidement et simplement positionner les conduites hydrauliques 20. En outre, ceci permet de rapidement repérer quelle face du support est destinée à être en regard du dispositif hydraulique ce qui diminue le risque de malfaçon.

La deuxième face 10B du support de circuit 10, est à l'opposé de la première face 10A. De préférence, cette deuxième face 10B est au contact de la plaque métallique 30 décrite ci-après.

Avantageusement, le support de circuit 10 présente une densité globale inférieure à 800 kg/m³. Par exemple, un support de circuit 10 en bambou présente habituellement une densité globale comprise entre 600 et 700 kg/m³. De façon préférée, sa densité globale est inférieure à 700 kg/m³ et, de façon plus préférée, sa densité globale ou masse volumique est comprise entre 400 et 600 kg/m³. Une telle densité permet de faciliter la manoeuvrabilité pour l'assemblage et l'installation. En effet, une densité trop élevée entraine un poids trop important et rend la manipulation des éléments, de l'assemblage et de l'installation difficile.

L'épaisseur du support de circuit 10 est généralement inférieure à 20 mm. De façon préférée, elle est comprise entre 5 mm et 15 mm. De façon encore plus préférée, elle est sensiblement égale à 10 mm. De même, le contrôle de l'épaisseur permet d'obtenir un support suffisamment rigide pour supporter l'ensemble des conduites qu'il comporte tout en conservant un poids ne rendant pas sa manipulation complexe ou éprouvante.

En outre, le support de circuit 10 présente une surface comprise entre 0,1 m² et 5 m², de préférence comprise entre 0,25 m² et 3 m², de façon plus préférée comprise entre 0,5 m² et 2 m². Ceci se traduit par une diminution de l'encombrement et une facilité de manipulation et donc cela se traduit également par un gain de temps lors de l'installation.

Avantageusement, le support de circuit 10 peut comporter plusieurs trous de fixation 13 permettant de fixer rapidement les conduites hydrauliques au support de circuit 10 par l'intermédiaire des moyens de fixation décrits ci-après. En effet, de façon préférée, chacun des trous de fixation 13 est agencé de façon à pouvoir accueillir une extrémité d'un moyen de fixation. Une fois inséré dans le support, le moyen de fixation ne peut être retiré sans exercer une force importante et donc les conduites hydraulique peuvent être maintenues correctement. De préférence, le support de circuit 10 comporte au moins cinq trous de fixation 13, de façon plus préférée au moins huit et de façon encore plus préférée au moins dix.

En outre, le support de circuit 10 peut avantageusement comporter des évidements 15 permettant de réduire encore le poids du support de circuit 10 et faciliter ainsi sa manipulation. Dans ce cas, les évidements présentent avantageusement une surface comprise entre 50 cm² et 700 cm². Ceci permet en outre, un accès facilité pour le raccordement et la fixation sur le dispositif 2 hydraulique de régulation thermique.

Le support de circuit 10 est de préférence constitué au moins en partie d'un matériau polymère. Ainsi, le support de circuit 10 peut par exemple comporter des matériaux naturels assemblés au moyen de colle polymère telle qu'une colle thermoplastique par exemple une colle répertoriée dans la norme NF EN 204. Les matériaux naturels pouvant être assemblés pour former le support de circuit 10 peuvent par exemple correspondre à du bois, des fibres de bois agglomérées ou encore prendre une forme de lamellé / collé.

Le support de circuit 10 constitué au moins en partie d'un matériau polymère peut aussi comporter un panneau de bois couplé à un polymère expansé ou recouvert d'une résine polymère.

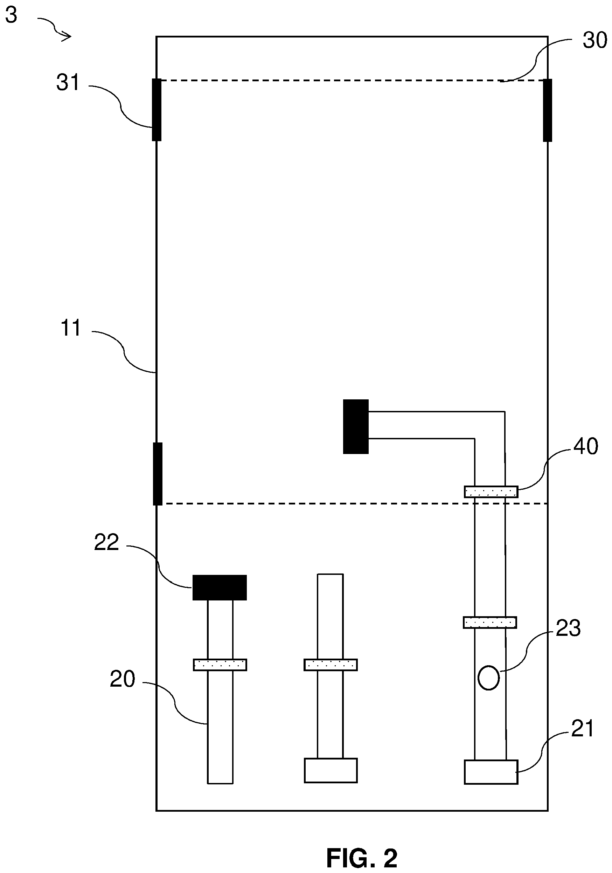

Comme illustré à la figure 2, le support de circuit 10 comporte avantageusement au moins une plaque en matériau polymère rigide 11 sur laquelle est disposé un polymère expansé 12. En outre, la dureté de la surface de la plaque en matériau polymère rigide 11 est avantageusement supérieure à 40 telle que mesurée par la norme ISO 868. De façon préférée, la dureté de la surface du matériau polymère rigide 11 est supérieure ou égale à 45. Cette dureté de surface permet de conserver un panneau peu sensible aux rayures ou aux dommages externes légers convenant ainsi parfaitement à une utilisation dans un environnement de type chantier / construction.

Avantageusement, la plaque en matériau polymère rigide 11 et le polymère expansé 12 présentent des densités différentes. Par exemple, le support de circuit 10 comporte avantageusement au moins une plaque en matériau polymère rigide 11 présentant une densité supérieure à 700 kg/m³ sur laquelle est disposé un polymère expansé 12 présentant une densité inférieure à 700 kg/m³.

La combinaison de ces deux polymères permet d'améliorer les propriétés du support de circuit 10 de façon à procurer un ensemble préfabriqué qui soit robuste tout en étant facilement manipulable. En particulier, la plaque en matériau polymère rigide 11 présente une densité supérieure à 700 kg/m³, de préférence supérieur à 800 kg/m³.

Le polymère expansé 12 peut quant à lui présenter une densité inférieure à 700 kg/m³, de préférence inférieure à 600 kg/m³. La densité ou masse volumique est de préférence mesurée selon la norme EN ISO 1183-1.

Avantageusement, et comme cela est présenté en figure 2, le support de circuit 10 comporte deux plaques en matériau polymère rigide 11 entre lesquelles est disposé un polymère expansé 12. Cet agencement forme une structure de type sandwich où le polymère expansé 12, structure à plus faible densité, est entouré par une ou plusieurs plaques en matériau polymère rigide 11.

La plaque en matériau polymère rigide 11 et le polymère expansé 12 peuvent être composés de différents polymères pouvant par exemple être sélectionnés parmi : les polymères (meth)acryliques (e.g. PMMA-polyméthacrylate de méthyle), les polyesters saturés (e.g. PET-polytéréphtalate d'éthylène, PETG-polytéréphtalate d'éthylène glycosilé, PBT-polytéréphtalate de butylène, PLA-acide polylactique), le polyéthylène (PE), le polycarbonate (PC), le Polychlorure de vinyle (PVC), le Polyfluorure de vinylidène (PVDF), le PVC chloré (PVCC), le polyurétane (PU), le polypropylène (PP). La plaque en matériau polymère rigide 11 et le polymère expansé 12 peuvent également être constitués de copolymères.

Ainsi, le support de circuit 10 selon l'invention selon ces caractéristiques avantageuses permet des avantages nets en termes de poids comparé à un support en polypropylène compact classique dont la densité pourrait être supérieure à 900 kg/m³. En plus de cela, grâce aux caractéristiques ci-dessus, le support de circuit 10 présente un excellent rapport entre ténacité et grande rigidité, solidité et haute résistance aux produits chimiques ou bien au feu. En outre, il présente une rigidité et une résistance à la flexion plus élevées par rapport aux panneaux PVC standards.

La panoplie 1 de raccordement pour dispositif hydraulique de régulation thermique comprend **une plaque métallique 30.** La plaque métallique est apte à être fixée au support de circuit 10. De préférence, elle est fixée au support de circuit 10.

La plaque métallique 30, de préférence au moins une partie de la plaque métallique, est au contact du support de circuit 10. Ainsi, il existe un contact physique direct entre le support de circuit 10 et la plaque métallique 30. La partie de la plaque métallique 30 au contact du support est de préférence au contact de la deuxième face 10B du support de circuit 10.

En particulier, la partie de la plaque métallique 30 au contact du support de circuit 10 peut présenter une épaisseur d'au plus 10 mm, de préférence d'au plus 5 mm, et de façon plus préférée d'au plus 2 mm. Cette plaque métallique permet de renforcer et consolider le support de circuit en évitant tout risque de casse ou de rupture tout en étant peu encombrante. Ceci augmente la maniabilité et l'assemblage ce qui facilite et simplifie l'installation et permet également un gain de temps.

Par ailleurs, la partie de la plaque métallique 30 au contact du support de circuit 10 présente par exemple une surface supérieure à 100 cm², de préférence supérieure à 200 cm², de façon plus préférée supérieure à 500 cm², de façon encore plus préférée supérieure à 800 cm². Ceci permet de renforcer et consolider le support de circuit. En outre, ceci permet d'augmenter la résistance du support de circuit tout en évitant des risques de casse ou de rupture.

La plaque métallique 30 est de préférence constituée d'un alliage métallique tel que l'acier inoxydable. Ceci permet d'assurer à la plaque métallique résistance à la déformation, dureté et résistance au choc. Ceci se traduit également par une durée de vie augmentée de l'assemblage et de l'installation.

Avantageusement, la plaque métallique 30 présente une forme allongée, rectangulaire, parallélépipédique. Avantageusement, les bords de la plaque métallique 30 sont évasés. De manière préférée, seul deux bords sont évasés et les deux bords préférentiellement évasés correspondent au sens de la largeur de la plaque métallique 30. Ceci permet de diminuer l'utilisation de métal pour la fabrication de la plaque et d'améliorer sa manoeuvrabilité tout en diminuant son poids.

En outre, la plaque métallique 30 peut avantageusement comporter des évidements permettant de réduire encore le poids du panneau et faciliter ainsi sa manipulation. Les évidements de la plaque métallique sont de préférence positionnés en regard des évidements 15 du support de circuit 10. Les évidements présentent avantageusement une surface comprise entre 50 cm² et 700 cm². Ceci permet en outre, un accès facilité pour le raccordement et la fixation sur le dispositif 2 hydraulique de régulation thermique.

De préférence, la plaque métallique 30 est fixé au support de circuit 10 par l'intermédiaire d'au moins 4 organes de fixation sélectionnés parmi : écrou à griffes, écrou à douille, inserts filetés, écrous en T, écrou à embrase.

De préférence, la plaque métallique est fixée sur la deuxième face 10B du support de circuit 10, et de manière encore plus préférée dans une partie haute du support de circuit 10 (par opposition à la partie centrale de la deuxième face 10B du support de circuit 10.

Ceci permet de mieux répartir les forces de poids et la force de gravité s'appliquant sur la plaque métallique et le support de circuit 10. Ceci permet également de lutter contre un risque de rupture ou de casse du support de circuit 10.

En outre, la plaque métallique 30, comprend au moins trois bras 31 de fixation, de préférence au moins quatre bras de fixation configurés pour permettre une fixation du support de circuit 10 au dispositif 2 hydraulique de régulation thermique de bâtiment. Avantageusement, ces bras métalliques comportent un alliage métallique tel que de l'acier ou de l'acier inoxydable, du fer, du carbone, des polymères ou des matériaux composites ; de préférence, ils sont constitués d'un alliage métallique tel que de l'acier ou de l'acier inoxydable. De façon préférée, ces bras 31 sont de même composition que la plaque métallique 30. Ces bras permettent de supporter le poids du panneau, ou le poids de la panoplie 1 de raccordement une fois assemblée et fixée au dispositif 2 hydraulique de régulation thermique. En outre, ces bras 31 métalliques permettent un assemblage rapide et simplifier du support de circuit 10 au dispositif hydraulique 2 de régulation thermique.

De préférence, les bras 31 sont positionnés aux extrémités de la plaque métallique et plus particulièrement au niveau des coins de la plaque métallique. Ceci assure un meilleur maintien et résistance de la plaque métallique. Alternativement, les bras 31 métalliques sont un prolongement de la plaque métallique 30. Ainsi, cela diminue le nombre de liaison entre chaque élément et donc augmente la résistance de la fixation de la plaque métallique au support de circuit et au dispositif 2 hydraulique de régulation thermique. En outre cela simplifie l'assemblage et diminue le temps d'installation. De façon à faciliter la fixation au dispositif hydraulique de thermorégulation, les bras métalliques 31 peuvent comporter des ouvertures ou des encoches.

En outre, les bras 31 métalliques peuvent présenter une épaisseur supérieure à celle de la plaque métallique 31. Ceci permet d'assurer un renforcement de la fixation entre le support de circuit 10 et le dispositif hydraulique 2 de régulation thermique. Ainsi, de préférence les bras 31 métalliques présentent une épaisseur d'au plus 15 mm, de préférence d'au plus 10 mm et de façon plus préférée de plus de 5 mm.

La panoplie de raccordement comporte **plusieurs conduites hydrauliques 20.** Ceci permet de faciliter l'assemblage. En effet, cela permet un repère visuel pour l'installateur (diamètre, longueur, nombre de conduites hydrauliques) d'une part mais également de faciliter le raccordement d'autre part. En outre, cela évite à l'installateur de façonner les conduites, ou encore de piquer, fileter, cintrer et/ou percer lesdites conduites. Cela se traduit par un gain de temps, par une accessibilité à un installateur non confirmé et également par une diminution du risque de malfaçon.

En particulier, la panoplie de raccordement peut comporter au moins deux conduites hydrauliques 20, de préférence au moins quatre, de façon plus préférée au moins six et de façon encore plus préférée au moins huit. Par exemple, une panoplie de raccordement selon l'invention, et donc un panneau selon l'invention, peut comporter entre deux et quinze conduites hydrauliques 20, de préférence entre quatre et dix conduites hydrauliques 20.

Les conduites hydrauliques sont constituées en majorité de cuivre, d'acier ou de laiton. De préférence les conduites hydrauliques sont constituées d'au moins 40 %, de préférence d'au moins 50 % et de manière encore plus préférée d'au moins 60 % de cuivre, d'acier ou de laiton. De préférence, elles sont constituées en majorité de cuivre et peuvent comporter un traitement anti corrosion. Ainsi, elles ajoutent une protection contre le développement de légionnelles dans le réseau hydraulique de l'installation notamment lorsque la panoplie 1 est utilisé, au moins en partie, pour de la distribution d'eau chaude. En outre, le cuivre, le laiton ou l'acier permettent d'augmenter le transfert de chaleur, la conductivité thermique mais également de simplifier l'usinage des conduites hydrauliques.

Les conduites hydrauliques sont de longueur variable, comprise par exemple entre 10 et 400 centimètres, de préférence entre 10 et 200 centimètres et un diamètre interne compris entre 5 et 50 centimètres, de préférence entre 15 et 35 centimètres. Néanmoins, les conduites hydrauliques 20 peuvent présenter une longueur bien plus faible, par exemple comprise entre 2 et 10 centimètres.

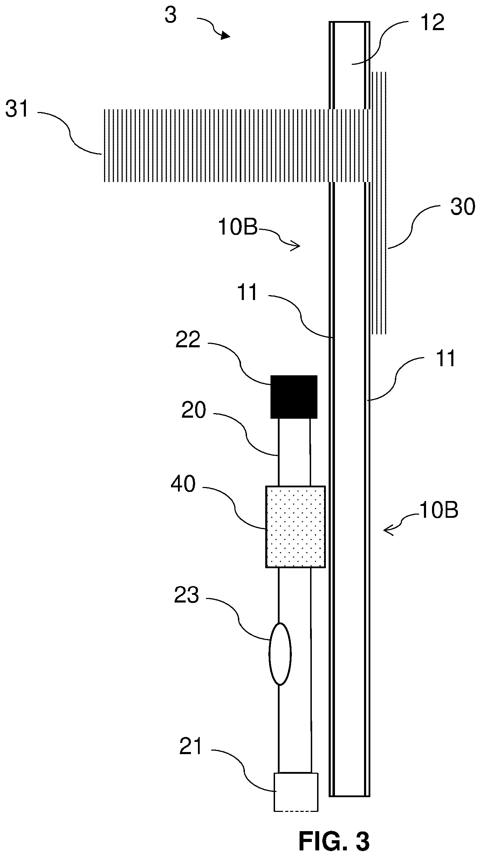

Comme illustré aux figures 1, 2 et 3, les conduites hydrauliques 20 comportent deux extrémités et avantageusement elles comportent à chacune de leurs extrémités un moyen de raccordement amovible 21, 22. Ceci permet d'une part, pour le moyen de raccordement amovible 21, un raccordement amovible avec des conduits permettant d'acheminer l'eau et d'autre part, pour le moyen de raccordement amovible 22, un raccordement amovible avec le dispositif hydraulique de thermorégulation. Avantageusement, les moyens de raccordement amovible 21 sont positionnés au niveau d'un bord du support 10 de façon à faciliter leur jonction avec une conduite. De préférence, les moyens de raccordement amovibles 21,22 peuvent correspondre à un collet battu. Ceci permet de faciliter le raccordement. Par exemple, ceci permet le raccordement d'une conduite hydraulique 20 avec un raccord fileté par l'intermédiaire d'un écrou. L'étanchéité peut en outre être assurée par un joint, un joint fibre ou tout autre moyen adapté.

En particulier, la panoplie 1 de raccordement peut comprendre une ou plusieurs conduites intermédiaires, reliées directement ou indirectement à une sortie de distribution du dispositif 2 hydraulique de régulation thermique. Par indirectement, il faut comprendre que la panoplie 1 de raccordement peut comprendre des dispositifs tels que des actionneurs ou des dispositifs de mesure positionnés entre une conduite et une conduite intermédiaire.

Une telle versatilité permet de répondre à la diversité des besoins en agencement et permettre la mise en place aisée et rapide d'un réseau de distribution correspondant au mieux à la demande particulière de l'installation.

En outre, le moyen de raccordement amovible 21,22 est sélectionné parmi : écrou, mamelon droit, réduit ou égal, raccord 3 pièces, raccord union, té, coude. Ceci permet de faciliter la jonction entres les conduites ou entre une conduite et un autre élément.

Avantageusement, une des conduites hydrauliques 20, de préférence au moins deux des conduites hydrauliques 20, comporte un clapet 23 anti-thermosiphon. Un tel clapet 23 anti-thermosiphon permet de réguler la circulation de l'eau. Le clapet 23 anti-thermosiphon est positionné à une extrémité d'une des conduites hydrauliques 20 ou entre les extrémités d'une des conduites hydrauliques 20.

La panoplie 1 de raccordement peut également comprendre des dispositifs tels que des actionneurs ou des dispositifs de mesure positionnés entre les conduites hydrauliques 20. La panoplie 1 selon l'invention peut par exemple comprendre en outre des compteurs d'eau, des électrovannes, des débitmètres, des sondes de température et/ou des calorimètres. Par ailleurs, la panoplie 1 de raccordement comporte au moins un élément sélectionné parmi : dispositif anti-pollution, soupape de sécurité, groupe de remplissage, vanne d'arrêt, vanne directionnelle, débitmètre, purgeur d'air, séparateur d'air, pot de décantation, soupape de pression différentielle, et/ou soupape antigel. Ceci permet d'assurer la sécurité, la protection, ou le nettoyage des éléments de la panoplie 1 de raccordement.

En particulier, la panoplie de raccordement 1 peut également comporter une ou plusieurs vannes 25 aptes à modifier ou à stopper un débit d'eau entre conduites hydrauliques 20. Plus particulièrement, ces vannes permettent de modifier ou stopper l'écoulement de l'eau sortant des conduites hydrauliques. Ces vannes 25 peuvent être intégrées dans les conduites hydrauliques 20 ou positionnées aux extrémités des conduites hydrauliques 20.

Dans le cas d'une distribution d'eau froide, la panoplie 1 de raccordement selon l'invention pourra comporter un compteur divisionnaire d'eau froide, avec des vannes 25 amont et aval permettant d'aisément démonter le compteur d'eau, ainsi qu'un clapet anti-pollution. Le clapet antipollution peut faire office de vanne aval. La panoplie de raccordement pourra également comporter un réducteur de pression placé de préférence avant le compteur d'eau.

Dans le cas de la distribution d'eau chaude sanitaire, on trouvera généralement un compteur d'eau ainsi que les vannes amont et aval. Chacune des conduites hydrauliques 20 est alors reliée à un compteur d'eau, ledit compteur d'eau pouvant être relié à une sortie de distribution d'une conduite hydraulique 20.

Dans le cas de la distribution de chauffage, La panoplie 1 de raccordement selon l'invention pourra comprendre des circuits aller et retour, sur le circuit aller on pourra trouver un compteur de calories (non représenté) et une vanne 25, on pourra trouver sur le circuit retour une vanne porte sonde permettant de mesurer la température de retour, cette sonde pouvant être reliée au compteur de calories.

La panoplie 1 de raccordement peut comporter des moyens de fixation 40 aptes à fixer les conduites hydrauliques 20 au support de circuit 10. Ces moyens de fixation 40 sont de préférence en polymère. Ceci permet de fournir l'aide nécessaire à un installateur en prévision de l'installation et de l'assemblage. Cela se traduit par un gain de temps, une simplification et une aisance augmentée pour l'installation et l'assemblage.

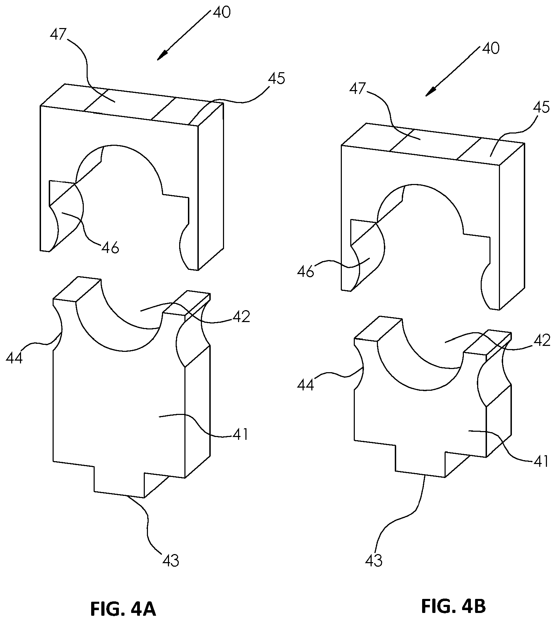

Des moyens de fixation 40 ayant une structure avantageuse sont détaillés aux **figures 4A et 4B****.** Ainsi, avantageusement, un moyen de fixation 40 en polymère est de préférence constitué d'au moins deux parties 41, 45, une première partie 41 étant apte à s'insérer dans le support de circuit 10 et une seconde partie 45 étant apte à maintenir une conduite hydraulique 20 entre la première partie 41 et la seconde partie 45 et à se fixer de manière amovible à la première partie 41. Comme cela est présenté en figure 4A et 4B, les moyens de fixation 40 présentent une forme sensiblement plane. Ils comportent un moyen d'accroche 46 solidaire de la seconde partie 45 configuré pour venir se positionner, lors de la fermeture des moyens de fixation 40, dans un logement 44 formé dans la première partie 41. Lorsque la seconde partie 45 est fixée à la première partie 41, un emplacement 42 correspondant au diamètre extérieur d'une conduite hydraulique 20 est formé et permet de maintenir ladite conduite hydraulique 20.

Alternativement, le moyen de fixation 40 est constitué en une seule partie.

En outre, comme cela est visible en comparant le moyen de fixation 40 présenté en figure 4A et celui présenté en figure 4B, les moyens de fixation 40 peuvent présenter des tailles différentes de façon à faciliter l'organisation des conduits sur le support de circuit 10. Il est alors possible de faire sur le support de circuit 10 des étages différents tout en maintenant les tubes fixés au support de circuit 10. Ainsi, de façon avantageuse, le panneau 3 comporte des moyens de fixation 40 présentant des hauteurs différentes. Les valeurs de hauteurs présentant de préférence une différence d'au moins 2 centimètres, de façon encore plus préférée d'au moins 3 centimètres. Par exemple, certains moyens de fixation 40 peuvent présenter une hauteur comprise entre 70 et 90 centimètres tandis que d'autres moyens de fixation 40 peuvent présenter une hauteur comprise entre 40 et 60 centimètres.

Les moyens de fixation 40 sont de préférence constitués en matériau polymère rigide et peuvent être composés de différents polymères pouvant par exemple être sélectionnés parmi : les polymères (meth)acryliques (e.g. PMMA-polyméthacrylate de méthyle), les polyesters saturés (e.g. PET- polytéréphtalate d'éthylène, PETG-polytéréphtalate d'éthylène glycosilé, PBT- polytéréphtalate de butylène, PLA-acide polylactique), le polyéthylène (PE), le polycarbonate (PC), le Polychlorure de vinyle (PVC), le Polyfluorure de vinylidène (PVDF), le PVC chloré (PVCC), le polyurétane (PU), le polypropylène (PP). La plaque en matériau polymère rigide 11 et le polymère expansé 12 peuvent également être constitués de copolymères. Les moyens de fixation 40 peuvent également être constitués d'un assemblage de polymère rigide et de polymère expansé tels que décrit ci-dessus.

Selon un autre aspect illustré **aux** **figures 2** **et** **4****,** l'invention porte sur **un panneau 3 de raccordement** formé à partir d'une panoplie de raccordement selon l'invention.

Un tel panneau permet une installation rapide et simplifiée sur un site d'installation. Il peut faire gagner un temps important et entrainer une réduction des risques d'accident ou de malfaçons.

En outre, chacune des conduites hydrauliques 20 est de préférence apte à être reliée au dispositif 2 hydraulique de régulation thermique de bâtiment. Ainsi, au moins une conduite des conduites hydrauliques 20 peut être reliées de directement ou indirectement à une sortie de distribution du dispositif 2 hydraulique de régulation thermique. Par indirectement, il faut comprendre que le panneau peut comprendre des dispositifs tels que des actionneurs ou des dispositifs de mesure positionnés entre les conduites hydrauliques 20 et le dispositif hydraulique de thermorégulation.

Le panneau 3 de raccordement comporte des conduites hydrauliques 20 adaptées à un circuit d'eau chaude et des conduites hydrauliques 20 adaptées un circuit eau froide. En outre, le panneau 3 de raccordement selon l'invention pourra comprendre des portions de circuits aller et retour, d'une part pour le circuit eau froide et d'autre part pour le circuit eau chaude. Ainsi, avantageusement, au moins une des conduites hydrauliques 20 correspond à une entrée d'eau froide sanitaire ; au moins une des conduites hydrauliques 20 correspond à une sortie d'eau chaude sanitaire ; au moins une des conduites hydrauliques 20 correspond à une sortie d'eau chaude de chauffage ; et/ou au moins une des conduites hydrauliques 20 correspond à un retour d'eau chaude de chauffage.

Par ailleurs, les conduites hydrauliques 20 sont fixés au support de circuit 10 par l'intermédiaire d'un moyen de fixation 40

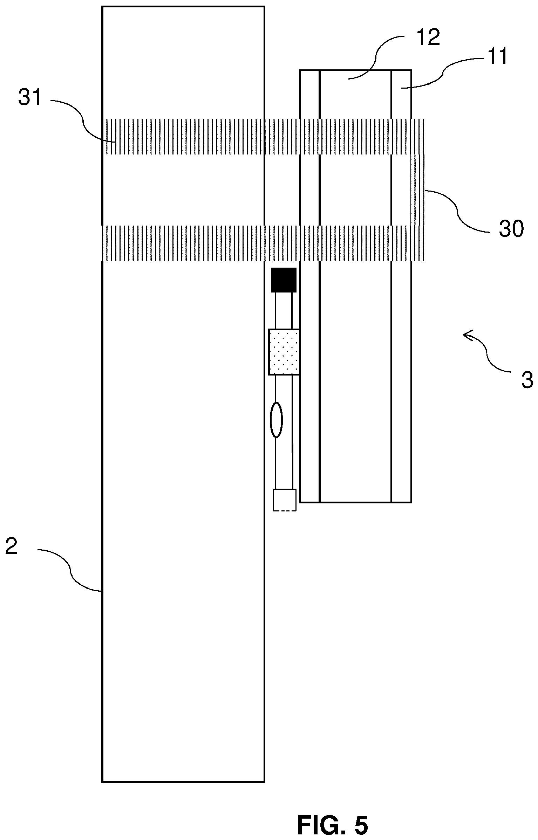

Selon un autre aspect, l'invention se rapporte à **un dispositif 2 hydraulique de régulation thermique de bâtiment** couplé à un panneau 3 de raccordement selon l'invention schématisé en **figure 5****.**

L'invention convient en particulier, notamment grâce au couplage support de circuit 10 et plaque métallique 30, aux dispositifs comportant une pluralité de sorties hydrauliques et destinés à être posés sur le sol (et non fixés en hauteur). En effet, dans ce cas il faut que le panneau soit en capacité à supporter sur le long terme la charge créée par la pluralité de conduites hydraulique contrairement au cas d'un dispositif fixé au mur où le maintien se fait grâce aux accroches du support de circuit contre le mur.

Un dispositif 2 hydraulique de régulation thermique de bâtiment selon l'invention correspond à tout type de dispositif de refroidissement ou de chauffage d'une installation. Par exemple, il peut s'agir d'un dispositif de climatisation, un dispositif de ventilation, un dispositif de chauffage, une pompe à chaleur. De préférence, un dispositif 2 hydraulique de régulation thermique correspond à une pompe à chaleur.

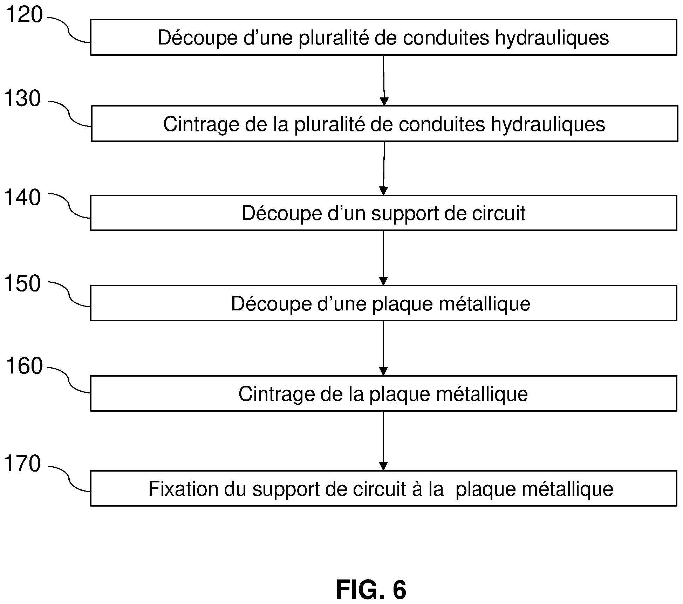

Selon un autre aspect illustré à **la** **figure 6****,** l'invention concerne **un procédé 100 de fabrication d'une panoplie de raccordement.** Un tel procédé permet de réaliser les étapes de conception en amont de l'installation sur site. Ceci permet de réduire les coûts, les occurrences de malfaçons et le risque d'accident.

En particulier, un procédé 100 de fabrication d'une panoplie 1 de raccordement comprend une étape 120 de découpe d'une pluralité de conduites hydrauliques 20, une étape 130 de cintrage de la pluralité de conduites hydrauliques 20, une étape 140 de découpe d'un support de circuit 10, une étape de découpe d'une plaque métallique 30, une étape de façonnage (e.g. cintrage) 160 de la plaque métallique 30, et optionnellement une étape 170 de fixation du support de circuit 10 à la plaque métallique 30.

**Une étape découpe 120 d'une pluralité de conduites hydrauliques 20** à des dimensions prédéterminées peut être réalisée par tout moyen apte à couper du cuivre, de l'acier ou du laiton. En outre, les dimensions de coupes des conduites hydrauliques correspondent de préférence à des longueurs de coupes prédéterminées. Ceci permet d'obtenir des fragments de conduites hydrauliques 20 de longueurs adaptées au support de circuit 10 et au dispositif hydraulique de thermorégulation. En outre, les longueurs sont de préférence comprises entre 10 et 400 cm. Ces longueurs sont prédéterminées en fonction de la taille du support, du site d'installation et du dispositif hydraulique.

En outre, l'étape de découpe peut être suivie par une étape de perçage et/ou de filetage des conduites hydrauliques 20.

Le perçage est réalisé par tout moyen apte à percer du cuivre, de l'acier ou du béton. Des repères de perçage peuvent être mis par marquage. En outre, les emplacements de perçage sur les conduites hydrauliques 20 sont définis en fonction du support de circuit 10, et du dispositif 2 hydraulique.

L'étape de filetage est réalisée par un moyen de filetage motorisé ou non motorisé apte à fileter du cuivre, de l'acier ou du laiton. De préférence, le filetage est réalisé via un dispositif motorisé et par exemple en présence d'huile. Ceci permet d'améliorer la durée de vie et la qualité du filet. En outre, le filetage est réalisé à des vitesses adaptées aux types de conduites hydrauliques 20. Ces vitesses sont en général connues de l'homme du métier. En outre, la vitesse est de préférence maintenue constante le temps du filetage.

Le procédé selon l'invention comprend **une étape de cintrage** 130 de la pluralité de conduites hydrauliques 20 selon des configurations prédéterminées. Le cintrage est réalisé de préférence par une cintreuse et de manière plus préférée par une cintreuse laser. Les configurations prédéterminées et notamment l'angle de cintrage sont définies en fonction du support de circuit 10, et du dispositif 2 hydraulique. Cette étape permet de donner une courbure précise aux conduites hydrauliques 20 ce qui permet de faciliter l'installation des conduites hydrauliques sur le support de circuit 10. En outre, ceci réduit le risque de malfaçon, notamment en identifiant la bonne base de référence dans des ateliers plutôt que sur le site d'installation et permet de diminuer le risque d'accident.

Le procédé 100 de fabrication selon l'invention comprend **une étape de découpe 140** d'un support de circuit 10 à des dimensions prédéterminées. Le support de circuit 10 est constitué au moins en partie d'un matériau polymère. De préférence, la découpe d'un support de circuit 10 est réalisée par tout moyen apte à couper un matériau polymère. De préférence, l'étape de découpe est réalisée par une découpeuse laser. Les dimensions prédéterminées du support sont déterminées en fonction, du nombre de conduites hydrauliques 20 et du dispositif 2 hydraulique de régulation thermique. En outre, une telle étape peut comprendre le marquage du support manuellement ou par impression d'un plan de découpe ou d'un patron de découpe. Une telle étape permet d'éviter tout risque d'accident sur le site d'installation et d'augmenter la sécurité. En outre, une telle étape permet de réduire le risque de malfaçon. Avantageusement, l'étape de découpe du support de circuit 10, comprend également la découpe du support de circuit 10 de façon à réaliser un ou plusieurs évidements 15 dans le support de circuit 10. En outre, cette étape peut également comprendre la découpe du support de circuit 10 de façon à réaliser des trous de fixation 13.

Le procédé 100 de fabrication selon l'invention comprend **une étape de découpe 150** d'une plaque métallique 30. De préférence, la découpe de la plaque métallique 30 est réalisée par tout moyen apte à découper un métal, de préférence un alliage métallique et de façon encore plus préférée de l'acier inoxydable. En outre, la plaque métallique 30 comporte au moins trois bras 31, de préférence au moins quatre bras. Pour cela, la découpe est réalisée de façon à ce que la plaque métallique comprenne au moins trois bras de préférence au moins quatre bras. Les dimensions de découpe sont fonctions du support de circuit 10 et du dispositif 2 hydraulique de régulation thermique. Par exemple, en fonction de la surface de contact avec le support de circuit 10 supérieure à 100 cm². En outre, l'étape de découpe peut également comprendre en plus de la découpe extérieure de la plaque métallique comprenant au moins trois bras 31, la découpe intérieure de la plaque métallique. Ainsi, selon une alternative, l'étape de découpe 150 peut comprendre la découpe à l'intérieur de la plaque métallique permettant de trouer la plaque métallique 30. Ces trous dans la plaque métallique 30 permettent d'accueillir les organes de fixations au support de circuit 10. Une telle étape permet d'éviter tout risque d'accident sur le site d'installation et d'augmenter la sécurité. En outre, une telle étape permet de réduire le risque de malfaçon.

Le procédé 100 de fabrication selon l'invention comprend **une étape 160 de façonnage** de la plaque métallique 30. De préférence, le façonnage 160 comprend le cintrage de la plaque métallique 30. En outre, il est avantageusement réalisé par une cintreuse motorisée, manuelle ou laser. Cette étape de façonnage 160 permet que les au moins trois bras de fixation 31 soient configurés de façon à permettre une fixation de la plaque métallique 30 à un dispositif 2 hydraulique de régulation thermique. Avantageusement, cette étape permet également de donner sa forme à la plaque métallique. Ceci permet de réduire le risque de malfaçon et de diminuer le risque d'accident sur le site d'installation.

Le procédé 100 de fabrication selon l'invention comprend **une étape de fixation 170** du support de circuit 10 à la plaque métallique 30. L'étape de fixation est de préférence réalisée par l'intermédiaire d'au moins quatre organes de fixations sélectionnés parmi : écrou à griffes, écrou à douille, inserts filetés, écrous en T, écrou à embrase. Ainsi, cette étape permet l'obtention d'une panoplie de raccordement comprenant un support de circuits découpé, une plaque métallique 30 découpée et cintrée et apte à être fixée au support de circuit 10 et comportant au moins trois bras de fixation 31 et plusieurs conduites hydrauliques 20 découpées et cintrées. Cette étape de fixation permet de réduire le risque de malfaçon sur site.

En outre, un tel procédé permet de diminuer les étapes de fabrication, installation sur site ce qui permet de réduite de temps, les coûts les risques de malfaçons, d'augmenter la sécurité et de respecter la règlementation en vigueur. De plus, grâce à une panoplie 1 de raccordement fabriquée selon le procédé 100 de fabrication selon l'invention, les installations peuvent être réalisées par des personnes non spécialisées.

## Revendications

1. Panoplie (1) de raccordement pour dispositif (2) hydraulique de régulation thermique de bâtiment, la panoplie comportant :
- un support de circuit (10) agencé pour accueillir plusieurs conduites hydrauliques (20), ledit support étant constitué au moins en partie d'un matériau polymère,
- une plaque métallique (30) apte à être fixée au support et comportant au moins trois bras de fixation (31) configurés pour permettre une fixation du support (10) au dispositif (2) hydraulique de régulation thermique de bâtiment,
- plusieurs conduites hydrauliques (20) ; en outre, ledit support de circuit (10) est agencé pour accueillir les conduites hydrauliques (20) du côté d'une première face (10A) du support de circuit (10) ; et
au moins une partie de la plaque métallique (30) est positionnée au contact d'une seconde face (10B) du support de circuit (10) à l'opposé de la première face (10A).

2. Panoplie (1) de raccordement selon la revendication 1, dans laquelle les bras de fixation (31) sont positionnés à des extrémités de la plaque métallique (30).

3. Panoplie (1) de raccordement selon l'une des revendications 1 ou 2, dans laquelle au moins une partie de la plaque métallique (30) est au contact du support de circuit (10) et en ce que la partie de la plaque métallique (30) au contact du support de circuit (10) présente une épaisseur d'au plus 10 mm, de préférence d'au plus 5 mm, et de façon plus préférée d'au plus 2 mm.

4. Panoplie (1) de raccordement selon l'une quelconque des revendications 1 à 3, dans laquelle au moins une partie de la plaque métallique (30) est au contact du support de circuit (10) et en ce que la partie de la plaque métallique (30) au contact du support de circuit (10) présente une surface supérieure à 100 cm², de préférence supérieure à 200 cm² de façon plus préférée supérieure à 500 cm².

5. Panoplie (1) de raccordement selon l'une quelconque des revendications 1 à 4, dans laquelle le support de circuit (10) présente une densité globale inférieure à 700 kg/m³.

6. Panoplie (1) de raccordement selon l'une quelconque des revendications 1 à 5, dans laquelle les bras (31) métalliques sont un prolongement de la plaque métallique (30).

7. Panoplie (1) de raccordement selon l'une quelconque des revendications 1 à 6, dans laquelle le support (10) comporte deux plaques en matériau polymère rigide (11) entre lesquelles est disposé le polymère expansé (12).

8. Panoplie (1) de raccordement selon l'une quelconque des revendications 1 à 7, dans laquelle le support de circuit (10) présente une surface comprise entre 0,1 m² et 5 m², de préférence comprise entre 0,25 m² et 3 m², de façon plus préférée comprise entre 0,5 m² et 2 m².

9. Panoplie (1) de raccordement selon l'une quelconque des revendications 1 à 8, dans laquelle la plaque métallique (30) est fixée au support de circuit (10) par l'intermédiaire d'au moins 4 organes de fixation sélectionnés parmi : écrou à griffes, écrou à douille, inserts filetés, écrous en T, écrou à embrase.

10. Panoplie (1) de raccordement selon l'une quelconque des revendications 1 à 9, dans laquelle les conduites hydrauliques (20) sont constituées en majorité de cuivre, d'acier ou de laiton.

11. Panoplie (1) de raccordement selon l'une quelconque des revendications 1 à 10, qui comporte en outre des moyens de fixation (40) en polymère aptes à fixer les conduites hydrauliques (20) au support de circuit (10).

12. Panoplie (1) de raccordement selon la revendication 11, dans laquelle le support de circuit (10) comporte en outre des trous de fixation (13) configurés accueillir une extrémité des moyens de fixation (40) de façon à les maintenir fixés au support de circuit (10).

13. Panneau (3) de raccordement formé à partir d'une panoplie (1) de raccordement selon l'une des revendications précédentes.

14. Dispositif (2) hydraulique de régulation thermique de bâtiment couplé, de préférence fixé, à un panneau (3) de raccordement selon la revendication 13.

15. Procédé (100) de fabrication d'une panoplie de raccordement, comprenant les étapes suivantes :
- découpe (120) d'une pluralité de conduites hydrauliques (20) à des dimensions prédéterminées,
- cintrage (130) de la pluralité de conduites hydrauliques (20) selon des configurations prédéterminées,
- découpe (140) d'un support de circuit (10) à des dimensions prédéterminées, ledit support de circuit (10) étant constitué au moins en partie d'un matériau polymère,
- découpe (150) d'une plaque métallique (30) comportant au moins trois bras de fixation (31),
- façonnage (160) de la plaque métallique (30) de façon à ce que les au moins trois bras de fixation (31) permettent une fixation de la plaque métallique (30) à un dispositif (2) hydraulique de régulation thermique de bâtiment, et
- fixation (170) du support de circuit (10) à la plaque métallique (30).

## Patentansprüche

1. Anschlusssatz (1) für hydraulische Vorrichtung (2) zur Wärmeregulierung in einem Gebäude, wobei der Satz aufweist:
- einen Kreislaufträger (10), der zum Empfang mehrerer hydraulischer Leitungen (20) eingerichtet ist, wobei der Träger mindestens zum Teil aus einem Polymermaterial besteht,
- eine Metallplatte (30), die zur Befestigung am Träger geeignet ist und mindestens drei Befestigungsarme (31) aufweist, die dazu ausgelegt sind, eine Befestigung des Trägers (10) an der hydraulischen Vorrichtung (2) zur Wärmeregulierung in einem Gebäude zu gestatten,
- mehrere hydraulische Leitungen (20);
wobei der Kreislaufträger (10) ferner zum Empfang der hydraulischen Leitungen (20) auf der Seite einer ersten Fläche (10A) des Kreislaufträgers (10) eingerichtet ist; und
mindestens ein Teil der Metallplatte (30) im Kontakt mit einer zweiten Fläche (10B) des Kreislaufträgers (10) gegenüber der ersten Fläche (10A) positioniert ist.

2. Anschlusssatz (1) nach Anspruch 1, wobei die Befestigungsarme (31) an den Enden der Metallplatte (30) positioniert sind.

3. Anschlusssatz (1) nach einem der Ansprüche 1 oder 2, wobei mindestens ein Teil der Metallplatte (30) im Kontakt mit dem Kreislaufträger (10) ist und dass der Teil der Metallplatte (30) im Kontakt mit dem Kreislaufträger (10) eine Dicke von höchstens 10 mm, vorzugsweise von höchstens 5 mm und bevorzugter von höchstens 2 mm aufweist.

4. Anschlusssatz (1) nach einem der Ansprüche 1 bis 3, wobei mindestens ein Teil der Metallplatte (30) im Kontakt mit dem Kreislaufträger (10) ist und dass der Teil der Metallplatte (30) im Kontakt mit dem Kreislaufträger (10) eine Oberfläche über 100 cm², vorzugsweise über 200 cm², bevorzugter über 500 cm² aufweist

5. Anschlusssatz (1) nach einem der Ansprüche 1 bis 4, wobei der Kreislaufträger (10) eine allgemeine Dichte unter 700 kg/m³ aufweist.

6. Anschlusssatz (1) nach einem der Ansprüche 1 bis 5, wobei die Metallarme (31) eine Verlängerung der Metallplatte (30) sind.

7. Anschlusssatz (1) nach einem der Ansprüche 1 bis 6, wobei der Träger (10) zwei Platten aus starrem Polymermaterial (11) aufweist, zwischen denen das expandierte Polymer (12) angeordnet ist.

8. Anschlusssatz (1) nach einem der Ansprüche 1 bis 7, wobei der Kreislaufträger (10) eine Oberfläche zwischen 0,1 m² und 5 m², vorzugsweise zwischen 0,25 m² und 3 m², bevorzugter zwischen 0,5 m² und 2 m² aufweist.

9. Anschlusssatz (1) nach einem der Ansprüche 1 bis 8, wobei die Metallplatte (30) am Kreislaufträger (10) mit Hilfe von mindestens 4 Befestigungseinrichtungen befestigt ist, die ausgewählt sind aus: Mutter mit Greifern, Mutter mit Hülse, Gewindeeinsätzen, T-Muttern, Mutter mit Basis.

10. Anschlusssatz (1) nach einem der Ansprüche 1 bis 9, wobei die hydraulischen Leitungen (20) mehrheitlich aus Kupfer, Stahl oder Messing bestehen.

11. Anschlusssatz (1) nach einem der Ansprüche 1 bis 10, der ferner Befestigungsmittel (40) aus Polymer aufweist, die zur Befestigung der hydraulischen Leitungen (20) am Kreislaufträger (10) geeignet sind.

12. Anschlusssatz (1) nach Anspruch 11, wobei der Kreislaufträger (10) ferner Befestigungslöcher (13) aufweist, die zum Empfangen eines Endes der Befestigungsmittel (40) derart ausgelegt sind, dass sie am Kreislaufträger (10) befestigt gehalten werden.

13. Anschlussplatte (3), die ausgehend von einem Anschlusssatz (1) nach einem der vorangehenden Ansprüche gebildet ist.

14. Hydraulische Vorrichtung (2) zur Wärmeregulierung in einem Gebäude, die an einer Anschlussplatte (3) nach Anspruch 13 gekoppelt, vorzugsweise befestigt ist.

15. Verfahren (100) zur Herstellung eines Anschlusssatzes, umfassend die folgenden Schritte:
- Zuschneiden (120) einer Vielzahl hydraulischer Leitungen (20) auf vorher festgelegte Abmessungen,
- Biegen (130) der Vielzahl hydraulischer Leitungen (20) gemäß vorher festgelegten Konfigurationen,
- Zuschneiden (140) eines Kreislaufträger (10) auf vorher festgelegte Abmessungen, wobei der Kreislaufträger (10) mindestens zum Teil aus einem Polymermaterial besteht,
- Zuschneiden (150) einer Metallplatte (30), die mindestens drei Befestigungsarme (31) aufweist,
- Formgeben (160) der Metallplatte (30) derart, dass die mindestens drei Befestigungsarme (31) eine Befestigung der Metallplatte (30) an einer hydraulischen Vorrichtung (2) zur Wärmeregulierung in einem Gebäude gestatten, und
- Befestigen (170) des Kreislaufträgers (10) an der Metallplatte (30).

## Claims

1. A connection panoply (1) for a thermal building regulation hydraulic device (2), the panoply including:
- a circuit support (10) arranged to accommodate several hydraulic pipes (20), said support being made up of at least partly a polymer material,
- a metal plate (30) able to be fixed to the support and including at least three fixing arms (31) configured to allow fixing of the support (10) to the thermal building regulation hydraulic device (2),
- several hydraulic pipes (20);
said circuit support (10) is further arranged to accommodate the hydraulic pipes (20) on the side of a first face (10A) of the circuit support (10); and
at least part of the metal plate (30) is positioned in contact with a second face (10B) of the circuit support (10) opposite the first face (10A).

2. The connection panoply (1) according to claim 1, wherein the fixing arms (31) are positioned at ends of the metal plate (30).

3. The connection panoply (1) according to any of claims 1 or 2, wherein at least part of the metal plate (30) is in contact with the circuit support (10) and in that the part of the plate metal (30) in contact with the circuit support (10) has a thickness of at most 10 mm, preferably at most 5 mm, and more preferably at most 2 mm.

4. The connection panoply (1) according to any one of claims 1 to 3, wherein at least part of the metal plate (30) is in contact with the circuit support (10) and in that the part of the metal plate (30) in contact with the circuit support (10) has a surface greater than 100 cm², preferably greater than 200 cm², more preferably greater than 500 cm².

5. The connection panoply (1) according to any one of claims 1 to 4, wherein the circuit support (10) has an overall density less than 700 kg/m³.

6. The connection panoply (1) according to any one of claims 1 to 5, wherein the metal arms (31) are an extension of the metal plate (30).

7. The connection panoply (1) according to any one of claims 1 to 6, wherein the support (10) includes two plates made of rigid polymer material (11) between which the expanded polymer (12) is disposed.

8. The connection panoply (1) according to any one of claims 1 to 7, wherein the circuit support (10) has a surface comprised between 0.1 m² and 5 m², preferably comprised between 0.25 m² and 3 m², more preferably comprised between 0.5 m² and 2 m².

9. The connection panoply (1) according to any one of claims 1 to 8, wherein the metal plate (30) is fixed to the circuit support (10) via at least 4 fixing members selected among: claw nut, sleeve nut, threaded inserts, T-nuts, flange nut.

10. The connection panoply (1) according to any one of claims 1 to 9, wherein the hydraulic pipes (20) are mainly made up of copper, steel or brass.

11. The connection panoply (1) according to any one of claims 1 to 10, which further includes polymer fixing means (40) able to fix the hydraulic pipes (20) to the circuit support (10) .

12. The connection panoply (1) according to claim 11, wherein the circuit support (10) further includes fixing holes (13) configured to accommodate one end of the fixing means (40) so as to keep them fixed to the circuit support (10).

13. A connection panel (3) formed from a connection panoply (1) according to any of the preceding claims.

14. A thermal building regulation hydraulic device (2) coupled, preferably fixed, to a connection panel (3) according to claim 13.

15. A method (100) for manufacturing a connection panoply, comprising the following steps:
- cutting (120) a plurality of hydraulic pipes (20) to predetermined dimensions,
- bending (130) the plurality of hydraulic pipes (20) according to predetermined configurations,
- cutting (140) a circuit support (10) at predetermined dimensions, said circuit support (10) being made up of at least partly a polymer material,
- cutting (150) a metal plate (30) including at least three fixing arms (31),
- shaping (160) the metal plate (30) so that the at least three fixing arms (31) allow fixing of the metal plate (30) to a thermal building regulation hydraulic device (2), and
- fixing (170) of the circuit support (10) to the metal plate (30).
